# EUROPEAN PATENT APPLICATION

(11) **EP 4 461 441 A1**
(43) Date of publication of application: **13.11.2024**
(21) Application number: 24174292.3
(22) Date of filing: 06.05.2024
(51) Int. Cl.: B22F 12/44, B22F 12/45, B22F 12/47, B22F 12/90, B33Y 30/00, B22F 10/28, B33Y 10/00, G02B 26/10

(54) **ADDITIVE MANUFACTURING APPARATUSES INCLUDING GANTRY FOR DIRECTING COLLIMATED LASER BEAM**

(30) Priority: 10.05.2023 US 202363465390 P
(71) Applicant: General Electric Company, Schenectady, NY 12345 (US)
(72) Inventor: SIMMERMON, David Scott, Schenectady, 12345 (US); STEELE, William Joseph, Schenectady, 12345 (US); THOMPSON, Brian Thomas, Schenectady, 12345 (US)
(74) Representative: Hafner & Kohl PartmbB

(57) **Abstract**

Disclosed herein are additive manufacturing apparatuses (10) which include a print head (106) supported by a positioning system (22), the print head (106) including one or more delivery optics (150) contained within the print head (106); a laser beam source assembly (102) isolated from the positioning system (22), the laser beam source assembly (102) configured to generate at least one collimated laser beam (138); and a laser beam receiver assembly (17) isolated from the laser beam source assembly (102), the laser beam receiver assembly (17) configured to receive the at least one collimated laser beam (138) and direct the at least one collimated laser beam (131, 133) to the one or more delivery optics (150) of the print head (106).

## Description

### CROSS-REFERENCE TO RELATED APPLICATION

The present specification claims the benefit of U.S. Provisional Patent Application Serial No. 63/465,390 filed May 10, 2023 and entitled "Additive Manufacturing Apparatuses Including Gantry for Directing Collimated Laser Beam," the entirety of which is incorporated by reference herein.

### TECHNICAL FIELD

The present specification generally relates to additive manufacturing apparatuses and, more specifically, to systems and methods for minimizing mechanical loading of the positioning systems of additive manufacturing apparatuses.

### BACKGROUND

Additive manufacturing apparatuses may be utilized to build an object from a build material, such as organic or inorganic powders, in a layer-wise manner. An example of additive manufacturing processes includes laser powder bed fusion systems. In some applications, additive manufacturing apparatuses use scanner assemblies which include one or more fiber lasers, collimators, adjustable beam focus assemblies, and mirrors mounted on galvanometers. These complex and heavy scanner assemblies are generally supported on positioning systems (e.g., a gantry) of the additive manufacturing apparatus. Thus, such positioning systems are subject to high mechanical loading which can make it difficult to maintain pointing accuracy of the scanner assembly.

Accordingly, a need exists for improved additive manufacturing apparatuses that minimize mechanical loading of the positioning systems of additive manufacturing apparatuses.

### BRIEF DESCRIPTION OF THE DRAWINGS

The embodiments set forth in the drawings are illustrative and exemplary in nature and not intended to limit the subject matter defined by the claims. The following detailed description of the illustrative embodiments can be understood when read in conjunction with the following drawings, where like structure is indicated with like reference numerals and in which:
FIG. 1 schematically depicts a side view of an additive manufacturing apparatus, according to one or more embodiments shown and described herein;
FIG. 2A schematically depicts a top view of the additive manufacturing apparatus of FIG. 1, where the additive manufacturing apparatus includes a laser beam source assembly and a laser beam receiver assembly, according to one or more embodiments shown and described herein.
FIG. 2B schematically depicts a front view of the additive manufacturing apparatus of FIG. 1, according to one or more embodiments shown and described herein.
FIG. 3 schematically depicts a top view of the laser beam source assembly and the laser beam receiver assembly of FIG. 2, according to one or more embodiments shown and described herein.
FIG. 4 schematically depicts a flow chart of a method of delivering at least one collimated laser beam to a print head supported by a positioning system of the additive manufacturing apparatus of FIG. 1, according to one or more embodiments shown and described herein.

### DETAILED DESCRIPTION

Embodiments described herein are directed to a laser beam source assembly which is isolated from the positioning system of an additive manufacturing apparatus and to a laser beam receiver assembly which receives the source laser beam output by the laser beam source assembly. The delivery of the laser beam is through free space and onto the positioning system where final directing and consolidating optics are located. The laser beam source assembly generally includes one or more laser sources and one or more collimators that project a combined collimated laser beam to the positioning system where the laser beam receiver assembly is located. The laser beam receiver assembly steers the collimated laser beam through a turning optic and onto one or more delivery optics contained within a print head of the additive manufacturing apparatus. The one or more delivery optics perform final laser beam steering and focusing. Moreover, one or more position sensors are used to track or map the print head or the positioning system such that the final laser beam positions can be regulated.

Thus, in accordance with the embodiments described herein, the laser source(s) and collimation components can be isolated from the moving positioning system. This is important because of the limits of the positioning system to hold precision while moving large loads. An additional benefit is gained by reducing the complexity of wire ways which are no longer needed since the fiber laser sources do not move with the positioning system. Furthermore, fiber fatigue is minimized. Additionally, easier access for cleaning and repairing of the laser source and collimators is provided. Moreover, the possibility of contamination during service and calibration of the additive manufacturing apparatus is reduced.

The beam source assembly includes one or more beam emitters, one or more collimators, and one or more beam combiners, each of which are isolated from the positioning system to reduce mechanical loading thereon. The beam receiver assembly includes a turning optic and an associated mount for positioning the turning optic and receiving a single collimated beam projected by the beam source assembly. Various embodiments of the apparatus and method for delivering at least one collimated laser beam to a print head supported by a gantry of an additive manufacturing apparatus and the operation of the apparatus and method are described in more detail herein. Whenever possible, the same reference numerals will be used throughout the drawings to refer to the same or like parts.

Unless otherwise expressly stated, it is in no way intended that any method set forth herein be construed as requiring that its steps be performed in a specific order, nor that with any apparatus specific orientations be required. Accordingly, where a method claim does not actually recite an order to be followed by its steps, or that any apparatus claim does not actually recite an order or orientation to individual components, or it is not otherwise specifically stated in the claims or description that the steps are to be limited to a specific order, or that a specific order or orientation to components of an apparatus is not recited, it is in no way intended that an order or orientation be inferred, in any respect. This holds for any possible non-express basis for interpretation, including: matters of logic with respect to arrangement of steps, operational flow, order of components, or orientation of components; plain meaning derived from grammatical organization or punctuation, and; the number or type of embodiments described in the specification.

As used herein, the singular forms "a," "an" and "the" include plural referents unless the context clearly dictates otherwise. Thus, for example, reference to "a" component includes aspects having two or more such components, unless the context clearly indicates otherwise.

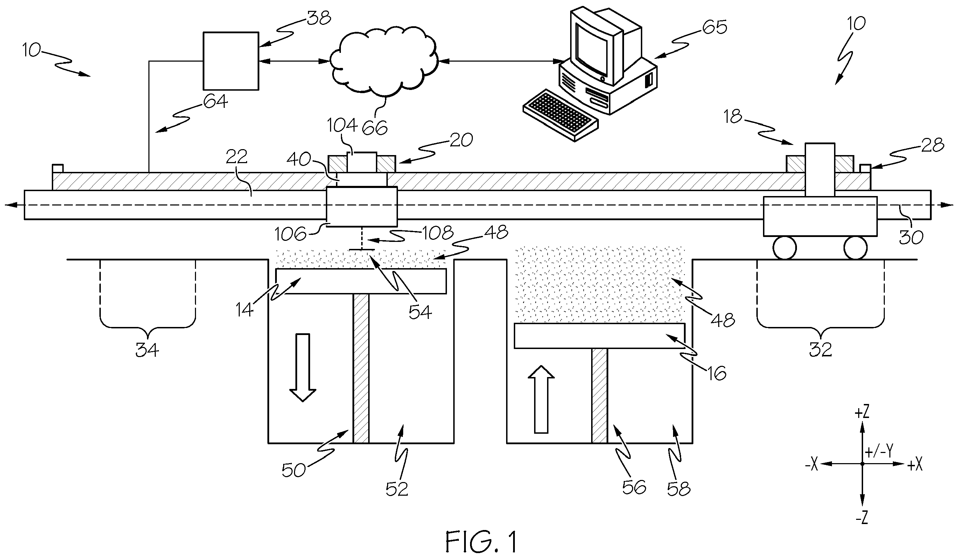

Referring now to FIG. 1, a manufacturing apparatus 10 is illustrated according to one or more embodiments described herein. The manufacturing apparatus 10 may generally include a build area or platform 14, a supply platform 16, a recoat assembly 18, and a printing assembly 20. The recoat assembly 18 and the printing assembly 20 are coupled to a positioning system 22 of the manufacturing apparatus 10 and are configured to translate along the positioning system 22 in response to an actuation of a first actuator assembly 28. The first actuator assembly 28 may be constructed to facilitate independent control of the recoat assembly 18 and the printing assembly 20 along a working axis 30 of the manufacturing apparatus 10. The working axis 30 is also referred to herein as the "longitudinal axis" (i.e., extending along the +/- X axis of the coordinate axes as depicted in the figures). This allows for the recoat assembly 18 and the printing assembly 20 to traverse the working axis 30 of the manufacturing apparatus 10 in the same direction and/or in opposite directions and for the recoat assembly 18 and the printing assembly 20 to traverse the working axis 30 of the manufacturing apparatus 10 at different speeds and/or the same speed.

In the embodiments described herein, the build platform 14, the supply platform 16, the recoat assembly 18, and the printing assembly 20 are positioned in series along the working axis 30 of the manufacturing apparatus 10 between a home position 34 of the printing assembly 20, located proximate an end of the working axis 30 in the -X direction, and a home position 32 of the recoat assembly 18, located proximate an end of the working axis 30 in the +X direction. In embodiments, the build platform 14 is positioned between home position 34 of the printing assembly 20 and the supply platform 16 along the working axis 30 of the manufacturing apparatus 10.

In embodiments, a second actuator assembly (not shown) may be constructed to facilitate independent control of the printing assembly 20 along a latitudinal axis (i.e., extending along the +/- Y axis of the coordinate axes as depicted in the figures), which is generally perpendicular to the longitudinal axis (i.e., the working axis 30). The first and second actuator assemblies may be controlled via signals generated by a control system 38 such as an electronic control unit. The electronic control unit may include a processor and a non-transitory computer readable memory.

The printing assembly 20 comprises, among other features, a support bracket 40 and a print head 106. The support bracket 40 is movably coupled to the positioning system 22 and the first actuator assembly 28 of the manufacturing apparatus 10 while the print head 106 is movably coupled to the support bracket 40 via the second actuator assembly (not shown).

As will be described below, the manufacturing apparatus 10 is used to scan a build plane 54 of one or more workpieces (not shown) positioned within the manufacturing apparatus 10 with one or more final laser beams 108 (e.g., a final laser beam(s)) emanating from the print head 106. Moreover, the manufacturing apparatus 10 is used to additively print (i.e., using an additive manufacturing technique(s)) one or more layers on each scanned workpiece.

As used herein, the terms "additively manufacturing" or "additive manufacturing techniques or processes" refer to manufacturing processes in which successive layers of material are deposited on top of each other to build-up, layer-by-layer, a three-dimensional component. The successive layers are melted or fused together to form a monolithic or integral component.

In several embodiments, the manufacturing apparatus 10 uses a powder bed fusion (PBF) technique, such as direct metal laser melting (DMLM) or directed metal laser sintering (DMLS). In such embodiments, layers of the workpiece are additively printed by melting or fusing a first layer of a build material or powder 48 to the build plane 54, melting or fusing a second layer of powder on top of the first layer, and so on. However, in some embodiments, the workpiece may be additively printed by melting or fusing a single layer of powder to the build plane 54. Furthermore, in alternative embodiments, the additive manufacturing apparatus 10 may use any other suitable additive manufacturing techniques or processes.

The recoat assembly 18 is constructed to facilitate a distribution of the powder 48 over the build platform 14 and the supply platform 16. The build platform 14 is coupled to a build platform actuator 50 to facilitate raising and lowering the build platform 14 relative to the working axis 30 of the manufacturing apparatus 10 in a vertical direction (i.e., a direction parallel to the +/-Z axis of the coordinate axes depicted in the figures). The build platform 14 and build platform actuator 50 are positioned in a build receptacle 52 located below the working axis 30 (i.e., in the - Z direction of the coordinate axes depicted in the figures) of the manufacturing apparatus 10. During operation of the manufacturing apparatus 10, the recoat assembly 18 fills the build receptacle 52 with powder 48 until the powder 48 forms a build plane (indicated by line 54). Next, the recoat assembly 18 spreads a layer of the powder 48 across the build plane 54. The layer of powder 48 is then melted or fused along the build plane 54 using the final laser beam 108 to form a first layer(s) of a workpiece. Thereafter, the build platform 14 is lowered (e.g., as indicated by the arrow) before the recoat assembly 18 spreads another layer of the powder 48 across the build plane 54. This layer may then be melted or fused to the first layer(s) using the final laser beam 108 to form a second layer(s) of the workpiece and so on.

Still referring to FIG. 1, the supply platform 16 is coupled to a supply platform actuator 56 to facilitate raising and lowering the supply platform 16 relative to the working axis 30 of the manufacturing apparatus 10 in a vertical direction (i.e., a direction parallel to the +/- Z axis of the coordinate axes depicted in the figures). The supply platform 16 and supply platform actuator 56 are positioned in a supply receptacle 58 located below the working axis 30 (i.e., in the -Z direction of the coordinate axes depicted in the figures) of the manufacturing apparatus 10. During operation of the manufacturing apparatus 10, the supply platform 16 is raised relative to the supply receptacle 58 and towards the working axis 30 of the manufacturing apparatus 10 by action of the supply platform actuator 56 after a layer of powder 48 is distributed from the supply platform 16 to the build platform 14.

The printing assembly 20 is constructed to direct a final laser beam 108 over the layer of powder 48 on the build platform 14 as the printing assembly 20 traverses the build platform 14 along the working axis 30 of the manufacturing apparatus 10. In general, the print head 106 directs the final laser beam 108 at the build plane 54, which allows the powder 48 spread across the build platform 14 to be melted/fused.

The manufacturing apparatus 10 may include any suitable number of print heads 106. For example, in the illustrated embodiment, the manufacturing apparatus 10 includes one print head 106. However, in alternative embodiments, the manufacturing apparatus 10 may include two print heads 106 or three or more print heads 106.

Still referring to FIG. 1, the manufacturing apparatus 10 may further include a control system 38 communicatively coupled to the first actuator assembly 28, the second actuator assembly 36, the recoat assembly 18, and/or the printing assembly 20. In embodiments, the control system 38 is coupled to the manufacturing apparatus 10 via a communication conduit 64. However, it should be understood that in other embodiments the control system 38 may be communicatively coupled to the manufacturing apparatus 10 via various other means or systems, such as, for example, through a wireless connection. The control system 38, which may also be referred to as an electronic control unit, comprises a processor and a non-transitory memory that includes computer readable and executable instructions stored thereon. Any action of the manufacturing apparatus 10, including the actions described herein, may be caused to be performed by the computer readable and executable instructions stored in the non-transitory memory of the control system 38 when executed by the processor of the control system 38. For example, one or more actuators may be actuated by the computer readable and executable instructions stored in the non-transitory memory of the control system 38 when executed by the processor of the control system 38 to cause the printing assembly 20 to operate.

In embodiments, the control system 38 may be further communicatively coupled to a computing device 65, optionally via a network 66, or directly via a communication link such as a wired or wireless connection. The computing device 65 may be configured to carry out processes such as generating executable instruction for building a component with the manufacturing apparatus 10, such as by implementing CAD or other related three-dimensional drafting and rendering systems as well as a slicing engine or the like.

Moreover, in some embodiments, the computing device 65 may be communicatively coupled to the print head 106 via the communication conduit 64. As such, the computing device 65 may be configured to control the operation of print head 106 such that a source laser beam (not shown) is focused into a final laser beam 108 that is scanned across the build plane 54. The computing device 65 also receives data associated with the location(s) of the final laser beam 108 relative to the build platform 14 from the print head 106 as the final laser beam is scanned across the build plane 54.

The configuration of the additive manufacturing apparatus 10 described above and shown in FIG. 1 is provided only to place the present subject matter in an exemplary field of use. Thus, the present subject matter may be readily adaptable to any manner of additive manufacturing apparatus, including additive manufacturing apparatuses that use different additive manufacturing techniques.

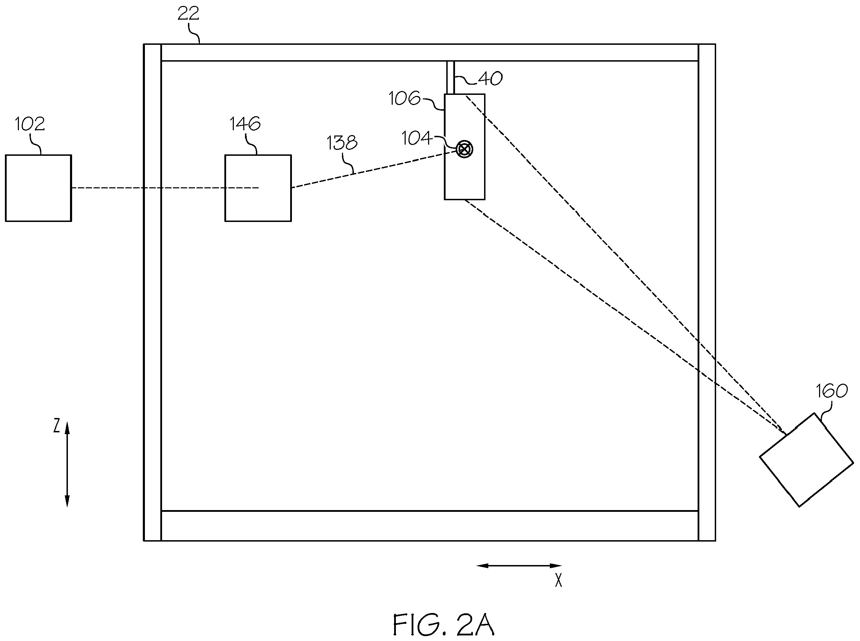

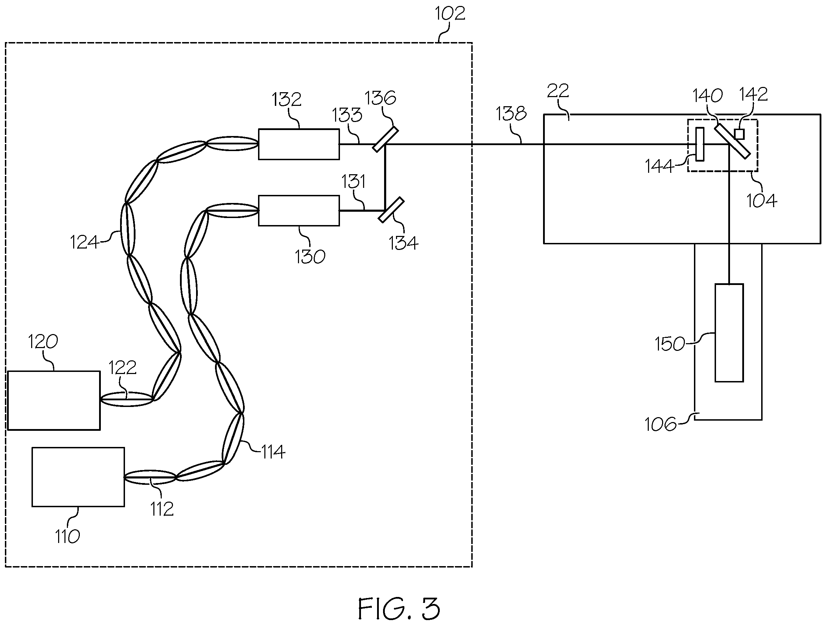

Referring now to FIG. 2A, a top view of the additive manufacturing apparatus 10 is shown to illustrate a laser beam source assembly 102 configured to generate at least one collimated laser beam 138. The at least one collimated laser beam 138 is received by the print head 106, which is movably mounted to the positioning system 22 via support bracket 40. More particularly, the at least one collimated laser beam 138 is received by a laser beam receiver assembly 104, in accordance with embodiments of the disclosure. The laser beam receiver assembly 104 is illustrated as being mounted to the print head 106, but it should be understood that the laser beam receiver assembly 104 could also be mounted to the positioning system 22. In any event, the laser beam receiver assembly 104 is ultimately configured to direct the at least one collimated laser beam 138 to one or more delivery optics (FIG. 3) contained within the print head 106, as discussed in further detail below.

The laser beam source assembly 102 is generally isolated from the positioning system 22 and projects the at least one collimated laser beam 138 through free space to be received by the laser beam receiver assembly 104. More particularly, the laser beam source assembly 102 is located in a fixed position relative to the positioning system 22 or the print head 106. However, as discussed in further detail below, this can be expanded to multiple axes of motion with the addition of a plurality of turning mirrors 146. The laser beam receiver assembly 104 is also isolated from the laser beam source assembly 102. In the illustration of FIG. 2A, the positioning system 22 is a gantry, but the disclosure is not limited thereto. In general, the positioning system 22 used in the present disclosure may be any multidimensional positioning system such as a delta robot, cable robot, robot arm, etc.

FIG. 2A further illustrates one or more position sensors 160 in accordance with the disclosure. The one or more position sensors 160 are positioned proximate the additive manufacturing apparatus 10 for detecting the position of the print head 106 and/or the position of the positioning system 22. As discussed in further detail below, the one or more position sensors 160 are utilized to regulate the final position of laser beams during operation of the manufacturing apparatus 10. The one or more position sensors 160 may be any sensor or sensor system for detecting the location and/or orientation of the print head 106 or positioning system 22, or more specifically, any specific point or points on the print head 106 or positioning system 22. For example, in some embodiments, the one or more position sensors 160 is an optical tracking system or laser tracking system. In this regard, for example, the one or more position sensors 160 may include a photodiode or other suitable optical sensor (not shown). In other embodiments, the one or more position sensors 160 may rely on principles of electromagnetism or may be a contact probe for precisely detecting positional data of the print head 106 or positioning system 22. In further embodiments, the one or more position sensors 160 may include an interferometer configured to detect bowing or flexing of the positioning system 22, which in turn causes deflection of the print head 106.

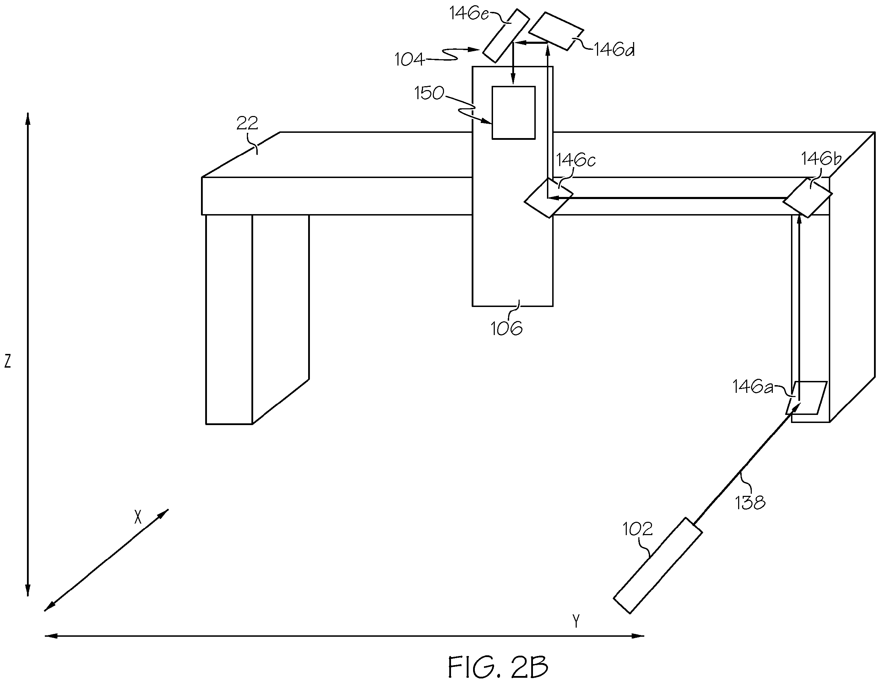

FIG. 2B further illustrates how the laser beam source assembly 102 is isolated from the positioning system 22 and the print head 106, but still allows for expansion to multiple axes of motion with the addition of a plurality of turning mirrors 146a-146e. The laser beam source assembly 102 is configured to generate at least one collimated laser beam 138 parallel to the +/- X axis and directed to a first turning mirror 146a disposed on the positioning system 22. The first turning mirror is configured to direct the at least one collimated laser beam 138 vertically (i.e., parallel to the +/- Z axis) to a second turning mirror 146b which is disposed on the positioning system 22. The second turning mirror 146b is configured to direct the at least one collimated laser beam 138 horizontally (i.e., parallel to the +/- Y axis) to a third turning mirror 146c which is fixed on the print head 106. The third turning mirror 146c is configured to direct the at least one collimated laser beam 138 vertically (i.e., parallel to the +/- Z axis) to a fourth turning mirror 146d which is disposed above the third turning mirror 146c. The fourth turning mirror 146d is configured to direct the at least one collimated laser beam 138 horizontally (i.e., parallel to the +/- Y axis) to a fifth turning mirror 146e. The fifth turning mirror 146e may be included as part of the laser beam receiver assembly 104, as discussed in further detail below, and is configured to direct the at least one collimated laser beam 138 to one or more delivery optics 150.

Referring now to FIG. 3, additional details of the laser beam source assembly 102 and the laser beam receiver assembly 104 are illustrated in accordance with the disclosure. The laser beam source assembly 102 generally includes a first laser supply or beam emitter 110 and a second laser supply or beam emitter 120. The first beam emitter 110 is generally configured to generate a first source laser beam 112 through a first laser medium or delivery fiber 114. The first source laser beam 112 is optically processed by a first collimator 130, such that the first collimator 130 is configured to convert the high divergence first source laser beam 112 output by the first beam emitter 110 into a well collimated, parallel, low divergence first collimated laser beam 131 using a lens system (not shown) which is matched to the first delivery fiber 114. In other words, the first delivery fiber 114 optically couples the first beam emitter 110 to the first collimator 130. The first collimator 130 is further optically coupled with a first beam combiner 134. The first beam combiner 134 is generally arranged at a 45 degree angle to initially direct the first collimated laser beam 131 to a second beam combiner 136. In some embodiments, the first beam combiner 134 is a dichroic mirror.

The second beam emitter 120 is generally configured to generate a second source laser beam 122 through a second laser medium or delivery fiber 124. The second source laser beam 122 is optically processed by a second collimator 132, such that the second collimator 132 is configured to convert the high divergence second source laser beam 122 output by the second beam emitter 120 into a well collimated, parallel, low divergence second collimated laser beam 133 using a lens system (not shown) which is matched to the second delivery fiber 124. In other words, the second delivery fiber 124 optically couples the second beam emitter 120 to the second collimator 132. The second collimator 132 is further optically coupled with a second beam combiner 136 which receives the second collimated laser beam 133. The second beam combiner 136 is generally arranged at a 45 degree angle to receive the first collimated laser beam 131 from the first beam combiner 134 and to combine the first collimated laser beam 131 with the second collimated laser beam 133 to form at least one collimated laser beam 138. Moreover, the second beam combiner 136 projects the at least one collimated laser beam 138 to the laser beam receiver assembly 104. In some embodiments, the second beam combiner 136 is a dichroic mirror.

In one embodiment, for example, the laser beam source assembly 102 may be configured such that the first beam emitter 110 has a first power output and the second beam emitter 120 has a second power output different from the first power output of the first beam emitter 110. In other embodiments, the first and second beam emitters 110, 120 may have substantially the same power output. In yet other embodiments, the laser beam source assembly 102 may include any number and combination of beam emitters that enable the manufacturing apparatus 10 to function as described herein. Moreover, in some embodiments, the first source laser beam 112 output by the first beam emitter 110 may have a first wavelength and the second source laser beam 122 output by the second beam emitter 120 may have a second wavelength different from the first wavelength of the first source laser beam 112. In other embodiments, the first and second source laser beams 112, 122 may have substantially the same wavelength.

The laser beam receiver assembly 104 generally includes a turning optic 140 (e.g., fifth turning mirror 146e from FIG. 2B) which is optically coupled to the second beam combiner 136 and a mount 142 which movably supports the turning optic 140. The turning optic 140 is generally configured to receive the at least one collimated laser beam 138 from the second beam combiner 136 and direct the at least one collimated laser beam 138 to one or more delivery optics 150. The turning optic 140 is generally coated for maximum transmission of the at least one collimated laser beam 138 having one or multiple wavelengths. In some embodiments, the turning optic 140 is a high reflectivity dielectric mirror. The laser beam receiver assembly 104 also includes a beam homogenizer 144 which receives the at least one collimated laser beam 138 from the second beam combiner 136. Alternatively, the beam homogenizer 144 receives the at least one collimated laser beam 138 from the turning optic 140. In any event, prior to reaching the beam homogenizer 144, the at least one collimated laser beam 138 has a round Gaussian or near-Gaussian energy distribution or profile. The beam homogenizer 144 converts the round Gaussian profile of the at least one collimated laser beam 138 to have an even or uniform energy distribution.

The mount 142 is generally configured to position the turning optic 140 based on a position of the at least one collimated laser beam 138. Moreover, the mount 142 is configured to position the turning optic 140 such that the turning optic 140 is optically coupled with one or more delivery optics 150. The one or more delivery optics 150 is contained within the print head 106 and is generally configured to output the final laser beam 108 to the build plane 54, as depicted in FIG. 1, which allows the powder spread across the build platform 14 to be melted/fused.

In some embodiments, the mount 142 is a gimbal-type mount which is capable of translational movement along the +/- X axis and the +/- Y axis. In some embodiments, movement of the mount 142, and thus movement of the turning optic 140, is controlled with one or more piezoelectric transducers (not shown). In other embodiments, movement of the mount 142 is controlled with one or more electro-mechanical devices. Moreover, in some embodiments, the computing device 65 may be communicatively coupled to the laser beam receiver assembly 104. As such, the computing device 65 may be configured to control the operation of the mount 142 such that the turning optic 140 can function as described herein. For example, the computing device 65 may control the operation of the mount 142 such that the turning optic 140 stays aligned with the at least one collimated laser beam 138 while the print head 106 traverses the working axis 30 of the manufacturing apparatus 10 (FIG. 1). In this regard, the turning optic 140 can deliver the single collimated beam 138 to the one or more delivery optics 150 contained within the print head 106 as the print head 106 moves. In some embodiments, the turning optic 140 may be mounted, via the mount 142, to the positioning system 22. In other embodiments, the turning optic 140 may be mounted to the print head 106 via the mount 142.

As briefly discussed above, one or more position sensors 160 (FIG. 2A) can be utilized to regulate the final position of laser beams during operation of the manufacturing apparatus 10. More specifically, the one or more position sensors 160 may produce positional data related to the print head 106 or the positioning system 22. This data may be compiled and relayed to the laser beam receiver assembly 104 (e.g., using control system 38 described above), such that the mount 142 can keep the turning optic 140 aligned with the one or more delivery optics 150 and deliver the at least one collimated laser beam 138 thereto. In some embodiments, the positional data from the one or more position sensors 160 is generated prior to operation of the manufacturing apparatus 10 as described above to pre-calibrate a position of the laser beam receiver assembly 104 using a look-up table stored in the control system 38 (FIG. 1). In other embodiments, the positional data from the one or more position sensors 160 is generated during operation of the manufacturing apparatus 10 and utilized by the control system 38 for real-time positional control and correction of the laser beam receiver assembly 104.

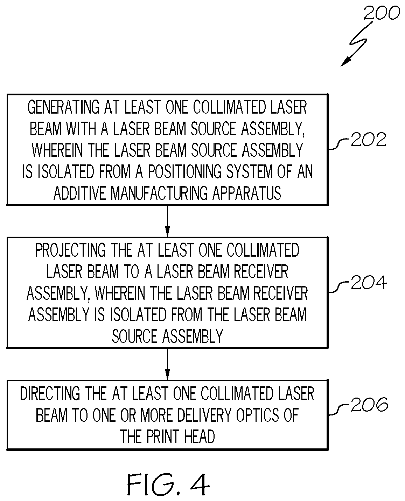

FIG. 4 is a flow diagram of a method 200 of delivering at least one collimated laser beam 138 to a print head 106 supported by a positioning system 22 of an additive manufacturing apparatus 10, as depicted in FIGS. 1-3. Method 200 includes generating the at least one collimated laser beam 138 with a laser beam source assembly 102, wherein the laser beam source assembly 102 is isolated from the positioning system 22, at step 202. Method 200 also includes projecting the at least one collimated laser beam 138 to a laser beam receiver assembly 104, wherein the laser beam receiver assembly 104 is isolated from the laser beam source assembly 102, at step 204. Method 200 additionally includes directing the at least one collimated laser beam 138 to one or more delivery optics 150 of the print head 106 at step 206.

From the above, it is to be appreciated that defined herein is a laser beam source assembly which is isolated from the positioning system of an additive manufacturing apparatus and to a laser beam receiver assembly which receives the source laser beam output by the laser beam source assembly. The delivery of the laser beam is through free space and onto the positioning system where final directing and consolidating optics are located. The laser beam source assembly generally includes one or more fiber laser sources and one or more collimators that project a collimated laser beam to the positioning system where the laser beam receiver assembly is located. The laser beam receiver assembly steers the collimated laser beam through a turning optic and onto one or more delivery optics contained within a print head of the additive manufacturing apparatus. The one or more delivery optics perform final laser beam steering and focusing. Moreover, one or more position sensors are used to track or map the print head or the positioning system such that the final laser beam positions can be regulated

Further aspects of the embodiments described herein are provided by the subject matter of the following clauses:
An additive manufacturing apparatus comprising: a print head supported by a positioning system, the print head including one or more delivery optics contained within the print head; a laser beam source assembly isolated from the positioning system, the laser beam source assembly configured to generate at least one collimated laser beam; and a laser beam receiver assembly isolated from the beam source assembly, the laser beam receiver assembly configured to receive the at least one collimated laser beam and direct the at least one collimated laser beam to the one or more delivery optics of the print head.

The additive manufacturing apparatus of any preceding clause, wherein the laser beam source assembly further comprises one or more beam emitters configured to generate one or more source laser beams.

The additive manufacturing apparatus of any preceding clause, wherein the laser beam source assembly further comprises one or more collimators optically coupled to the one or more beam emitters, the one or more collimators configured to generate collimated laser beams from the one or more source laser beams.

The additive manufacturing apparatus of any preceding clause, wherein the laser beam source assembly further comprises one or more beam combiners optically coupled to the one or more collimators, the one or more beam combiners configured to combine the collimated laser beams into the at least one collimated laser beam.

The additive manufacturing apparatus of any preceding clause, wherein the one or more beam combiners are dichroic mirrors.

The additive manufacturing apparatus of any preceding clause, wherein the laser beam receiver assembly further comprises a turning optic configured to receive the at least one collimated laser beam and direct the at least one collimated laser beam to the one or more delivery optics of the print head.

The additive manufacturing apparatus of any preceding clause, wherein the turning optic is a high reflectivity dielectric mirror.

The additive manufacturing apparatus of any preceding clause, further comprising a mount supporting the turning optic, the mount configured to position the turning optic based on a position of the at least one collimated laser beam.

The additive manufacturing apparatus of any preceding clause, wherein the mount is a gimbal type mount.

The additive manufacturing apparatus of any preceding clause, further comprising a piezoelectric transducer configured to position the turning optic.

The additive manufacturing apparatus of any preceding clause, further comprising an electro-mechanical device configured to position the turning optic.

The additive manufacturing apparatus of any preceding clause, further comprising a position sensor configured to track a position of the positioning system.

The additive manufacturing apparatus of any preceding clause, wherein the laser beam receiver assembly is mounted to the positioning system.

The additive manufacturing apparatus of any preceding clause, wherein the laser beam receiver assembly is mounted to the print head.

A method of delivering at least one collimated laser beam to a print head supported by a positioning system of an additive manufacturing apparatus, comprising: generating the at least one collimated laser beam with a laser beam source assembly, wherein the laser beam source assembly is isolated from the positioning system; projecting the at least one collimated laser beam to a laser beam receiver assembly, wherein the laser beam receiver assembly is isolated from the laser beam source assembly; directing the at least one collimated laser beam to one or more delivery optics of the print head.

The method of any preceding clause, further comprising positioning the laser beam receiver assembly based on a position of the at least one collimated laser beam.

The method of any preceding clause, further comprising generating one or more source laser beams, generating one or more collimated laser beams, and combining the one or more collimated laser beams to generate the at least one collimated laser beam.

The method of any preceding clause, further comprising controlling a position of the laser beam receiver assembly with a computing device.

An additive manufacturing apparatus comprising: a print head supported by a positioning system, the print head including one or more delivery optics contained within the print head; a laser beam source assembly isolated from the positioning system, the laser beam source assembly including: one or more beam emitters configured to generate one or more source laser beams; one or more collimators optically coupled to the one or more beam emitters, the one or more collimators configured to generate collimated laser beams from the one or more source laser beams; and one or more beam combiners optically coupled to the one or more collimators, the one or more beam combiners configured to combine the collimated laser beams into at least one collimated laser beam; and a laser beam receiver assembly isolated from the laser beam source assembly, the laser beam receiver assembly including: a turning optic configured to receive the at least one collimated laser beam and direct the at least one collimated laser beam to the one or more delivery optics of the print head; and a mount supporting the turning optic, the mount configured to position the turning optic based on a position of the at least one collimated laser beam.

The additive manufacturing apparatus of any preceding clause, further comprising a computing device configured to control a position of the laser beam receiver assembly based on the position of the at least one collimated beam.

It will be apparent to those skilled in the art that various modifications and variations can be made to the embodiments described herein without departing from the scope of the claimed subject matter. Thus, it is intended that the specification cover the modifications and variations of the various embodiments described herein provided such modification and variations come within the scope of the appended claims and their equivalents.

## Claims

1. An additive manufacturing apparatus comprising:
a print head supported by a positioning system, the print head including one or more delivery optics contained within the print head;
a laser beam source assembly isolated from the positioning system, the laser beam source assembly configured to generate at least one collimated laser beam; and
a laser beam receiver assembly isolated from the laser beam source assembly, the laser beam receiver assembly configured to receive the at least one collimated laser beam and direct the at least one collimated laser beam to the one or more delivery optics of the print head.

2. The additive manufacturing apparatus of claim 1, wherein the laser beam source assembly further comprises one or more beam emitters configured to generate one or more source laser beams.

3. The additive manufacturing apparatus of claim 2, wherein the laser beam source assembly further comprises one or more collimators optically coupled to the one or more beam emitters, the one or more collimators configured to generate collimated laser beams from the one or more source laser beams.

4. The additive manufacturing apparatus of claim 3, wherein the laser beam source assembly further comprises one or more beam combiners optically coupled to the one or more collimators, the one or more beam combiners configured to combine the collimated laser beams into the at least one collimated laser beam.

5. The additive manufacturing apparatus of claim 4, wherein the one or more beam combiners are dichroic mirrors.

6. The additive manufacturing apparatus of claim 1, wherein the laser beam receiver assembly further comprises a turning optic configured to receive the at least one collimated laser beam and direct the at least one collimated laser beam to the one or more delivery optics of the print head.

7. The additive manufacturing apparatus of claim 6, wherein the turning optic is a high reflectivity dielectric mirror.

8. The additive manufacturing apparatus of claim 6, further comprising a mount supporting the turning optic, the mount configured to position the turning optic based on a position of the at least one collimated laser beam.

9. The additive manufacturing apparatus of claim 8, wherein the mount is a gimbal type mount.

10. The additive manufacturing apparatus of claim 8, further comprising a piezoelectric transducer configured to position the turning optic.

11. The additive manufacturing apparatus of claim 8, further comprising an electro-mechanical device configured to position the turning optic.

12. The additive manufacturing apparatus of claim 1, further comprising a position sensor configured to track a position of the positioning system.

13. The additive manufacturing apparatus of claim 1, wherein the laser beam receiver assembly is mounted to the positioning system.

14. The additive manufacturing apparatus of claim 1, wherein the laser beam receiver assembly is mounted to the print head.

15. A method of delivering at least one collimated laser beam to a print head supported by a positioning system of an additive manufacturing apparatus, comprising:
generating the at least one collimated laser beam with a laser beam source assembly, wherein the laser beam source assembly is isolated from the positioning system;
proj ecting the at least one collimated laser beam to a laser beam receiver assembly, wherein the laser beam receiver assembly is isolated from the laser beam source assembly; and
directing the at least one collimated laser beam to one or more delivery optics of the print head.
